# EUROPEAN PATENT SPECIFICATION

(11) **EP 0 696 553 B1**
(45) Date of publication and mention of the grant of the patent: **02.12.1998**
(21) Application number: 95112546.7
(22) Date of filing: 09.08.1995
(51) Int. Cl.: C03C 1/00, C03C 10/02

(54) **Pyrocerams obtained from asbestos containing wastes and wastes of hydrometallurgy-industry and process for their preparation**
Pyrocerame hergestellt aus asbesthaltigen Abfällen und Abfällen der hydrometallurgischen Industrie und Verfahren zu deren Herstellung
Pyrocérames obtenus de déchets contenant de l'amiante et de déchets de l'industrie hydrométallurgique et méthode de leur production

(30) Priority: 10.08.1994 IT FI940155
(43) Date of publication of application: 14.02.1996
(73) Proprietor: CONSIGLIO NAZIONALE DELLE RICERCHE, 00185 Roma (IT)
(72) Inventor: Marabini, Anna Maria, I-00044 Frascati (Rome) (IT); Plescia, Paolo, I-00128 Rome (IT); Maccari, Dante, I-00157 Rome (IT); Cantalini, Carlo, I-67100 L'Aquila (IT); Ciriachi, Mauro, I-00144 Rome (IT); Abruzzese, Carlo, I-00198 Rome (IT)
(74) Representative: Gervasi, Gemma, Dr.

(56) References cited:
- FR-A- 2 398 704
- US-A- 5 085 838
- P. DURAN, J. F. FERNANDEZ 'THIRD EURO-CERAMICS, Volume 2: Properties of Ceramics' 12 September 1993 , FAENZA EDITRICE IBERICA , SPAIN * page 1097 - page 1102 *

## Description

### 1. Field of the invention

The present invention refers to pyrocerams obtained by thermic treatment of mixtures of wastes containing asbestos (WCA), and slurries from hydrometallurgy-processes for production of zinc and to a process for their preparation.

### 2. State of the art and summary of the invention

It is known that the pyrocerams are very important on the market of the new products to be used in "poor" and more advanced technologies. Pyrocerams are polycrystalline solids prepared by a process involving controlled melting and recrystallization starting from glass.

Depending on the crystallization degree, the kind of crystal-phases present in the glass and the thermic treatment performed it is possible to obtain products having markedly different properties and therefore useful in different application fields.

It is defined as amianthus or asbestos any mineral which, when suitably processed, gives fibers which can be spinned and are heat-resistant. This definition applies principally to six different minerals: chrysotile and five amphiboles: crocidolite, amosite, anthophyllite, tremolite and actinolite (the first two are trivial names which indicate respectively the mixture of amphiboles riebeckite-glaucophane and of cummingtonite and grunerite).

Chrysotile is by large the most used asbestos in the world, by itself it represents 93% of the whole asbestos used.

Asbestos is used as main component in at least 3000 different products (for example asbestos cement, asbestos cardboard, insulating materials, brakes, clutches, fabrics) and, as secondary component, in many others (for example talcs).

Asbestos wastes must be discharged in special dumping grounds for toxic and noxious materials with very high costs not to speak of the environmental problems involved.

The electrolytic process for the industrial production of metals, in particular zinc, is well known.

During said process great quantities of slurries containing a large amount of heavy metals are produced; depending on the kind of treatment involved the slurries contain in different percentage: jarosite [Fe₃(SiO₄)₂(OH)₆], goethite [α-FeOOH] haematite [α-Fe₂O₃]. Such slurries must be eliminated and the same storage problems as those already described for the case of the asbestos wastes arise.

It is therefore obvious that it would be extremely interesting to recycle such waste (wastes containing asbestos and slurries from hydrometallurgy-processes) in order to eliminate (or at least dramatically lower) the problems involved with their treatment.

FR-A-2.398.704 describes the treatment of serpentine wherein the mineral (possibly mixed up with red-muds deriving from bauxite-processing) is melted in the presence of fondents and the melted product is let crystallize by cooling down the melted mass.

P. Duran et al. in Euro-Ceramics, Vol. 2: Properties of Ceramics - 12 September 1993 - FAENZA EDITRICE, Spain pp. 1097-1102 describe glass-ceramics obtained from recycling goethite industrial waste.

US-A-5,085,838 describes a process for converting asbestos to a nonhazardous form by mixing asbestos with a flux and heating the mixture until said asbestos reacts with the flux to form a different crystalline structure containing sodium.

### 3. Description of the figures

Figure 1a is a diffractogram of a powder-sample from example 1 after melting.

Figure 1b is a diffractogram of a powder-sample from example 1 after crystallization.

Fig. 2 is an electronic microscope image of a sample from example 1 after crystallization (with a blow up in the bottom right square).

Fig. 3 is an optical microscope image of a sample of example 2 after melting.

Fig. 4 is an optical microscope image of a sample of example 2 after crystallization.

Fig. 5 is an electronic microscope image of a sample of example 2 after crystallization.

Fig. 6 shows a block-diagram of the process according to the present invention.

### 4. Detailed description of the invention

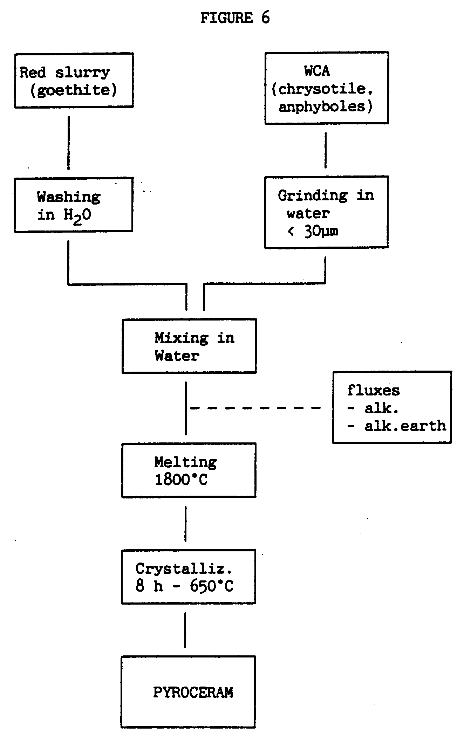

It was now found, and it is an object of the present application, that it is possible to use wastes containing asbestos, and the slurries from hydrometallurgy-processes for production of zinc for the preparation of pyrocerams by a suitable process. Such process is schematically represented in the block-diagram of Fig. 6.

The wastes containing asbestos are grinded in a tungsten-rings mill in the presence of water (30% - 70%, preferably 50% by weight) until particles of 10 - 60 µm (preferably 25 µm are obtained. The quantity of water in the obtained slurry will be 65 - 70% by weight.

The slurries from the hydrometallurgy-processes are washed with water and filtered twice in order to eliminate the sulphate residues which will make more difficult the following step of melting; therafter the slurries are dried in order to reduce the water under 40% by weight.

The slurry from the grinding of the wastes containing asbestos and the electrolitic slurries are mixed in a quantity comprised between 25% - 90% and 10% - 25% respectively.

If desired fluxes can be added to the mixture in a quantity of 15%-60% by weight (preferably 20%). Such fluxes are for example carbonates, as CaCO₃, Na₂CO₃, or waste of basic glass.

Water is added in a quantity equal to the weight of all the other components the mixture.

The so obtained mixture is melted, for example by using propane/oxygen ovens, at a temperature of 1100°C - 1400°C, preferably 1300°C ± 15°C.

After the melting the necessary crystallization treatments for obtaining pyrocerams are carried out. The crystallization is performed on the material from the the melting by warming at a temperature of 600°C - 900°C for 1 - 6 hours in high stability electric ovens (± 0.5°C/24 h).

The following examples will better describe the invention without any limitation purpose.

### EXAMPLE 1

### Pyroceram obtained without flux

The starting mixture consists of waste containing asbestos (WCA) and red-slurry of the goethite kind (RS) in the amount of 50 cm³ of WCA and 5.6 cm³ of red-slurry (90% WCA and 10% RS).

The WCA used is a powder obtained by grinding an insulating panel consisting of chrysotile, gypsum and calcite having an apparent density of 1.9 g/cm³ (Table 1). Water (25% by weight) is added to the mixture. The obtained slurry is poured in a platinum mould and melted at 1450°C for 6 minutes under repeated stirring. The melted mass was poured on a platinum base at a temperature of 760°C and gave a vitreous black compound bright and compact, without cracks and high-melting nuclei.

The obtained product shows the following characteristics:
- density: 3.2 g/cm³
- Vickers hardness: 760
- slightly etched in strong acids (HCl, 37% H₂SO₄ hot)
- high resistance against strong bases (NaOH 2M at 100°C)

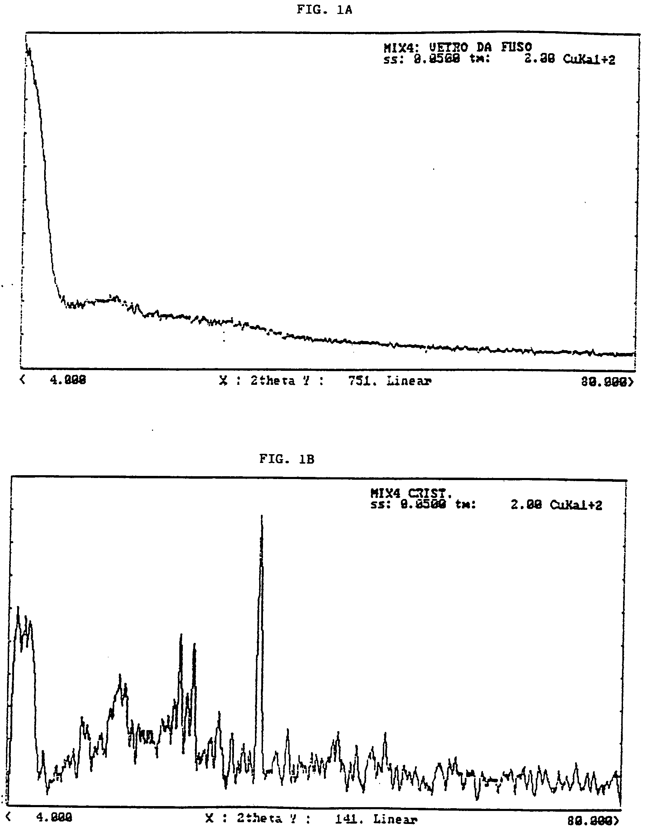

The optical microscope examination does not show asbestos fibers while the X-diffraction analysis does not reveal reflexes of crystalline substance (Fig. 1 a).

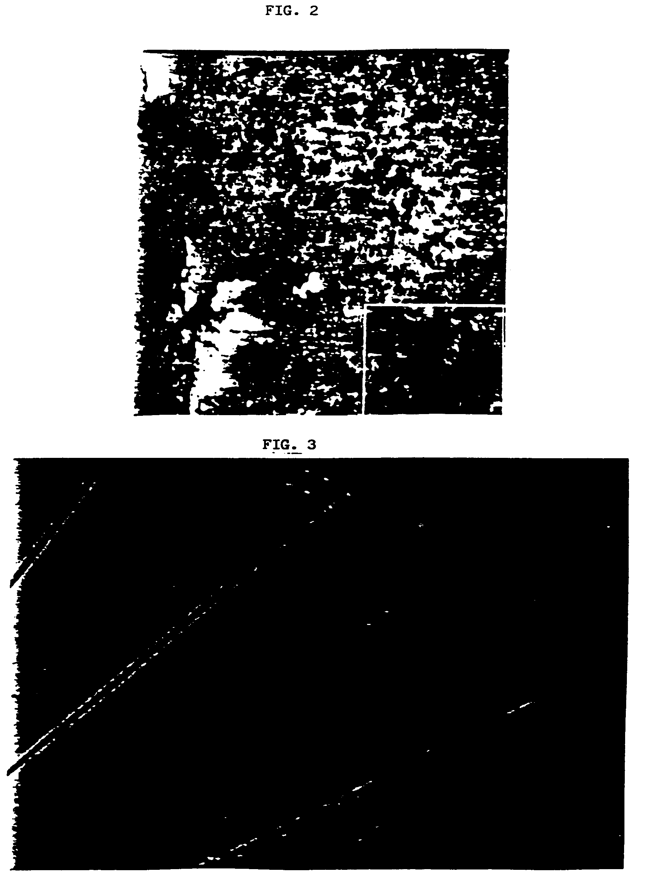

Crystallization was performed at 650°C for 6 hours in an electric oven. The so obtained material is very rich in crystals 2 - 5 µm (Fig. 2).

The crystals are homogeneously dispersed and form rayed little groups of 3 - 6 µm.

The X-diffraction analysis shows the presence of Fe- and Mg-silicates and few catchlights typical of spinels (Fig. 1b).

The same sample crystallized at 650°C for 16 h, shows the presence of bigger crystals 5 - 10 µm.

### EXAMPLE 2

### Pyroceram obtained in the presence of carbonate flux

The starting material is a mixture consisting of 25% red-slurry (goethite), 25% WCA (chrysotile panel, gypsum and calcite) and 50% calcium carbonate powder.

The various components the mixture were weighted and mixed up adding water (50% by weight calculated on the total weight).

The so obtained slurry was melted in a platinum mould at 1300°C; the melting was completed in 8 minutes stirring continuosusly in order to avoid formation of gas bubbles in the liquid phase.

The melted mass was poured on a steel base at room temperature, giving a black glass with metallic catchlights, bright and compact, without cracks, bubbles and high-melting nuclei.

The obtained product shows the following characteristics:
- density: 3.36 g/cm³
- Vickers hardness: 980
- etched by strong acids (HCl, 37% H₂SO₄)
- resistance to strong bases (NaOH 2M at 110°C)

The optical microscope analysis does not show asbestos fibers (see Fig. 3).

The X-diffraction analysis reveals the presence of magnetite catchlights.

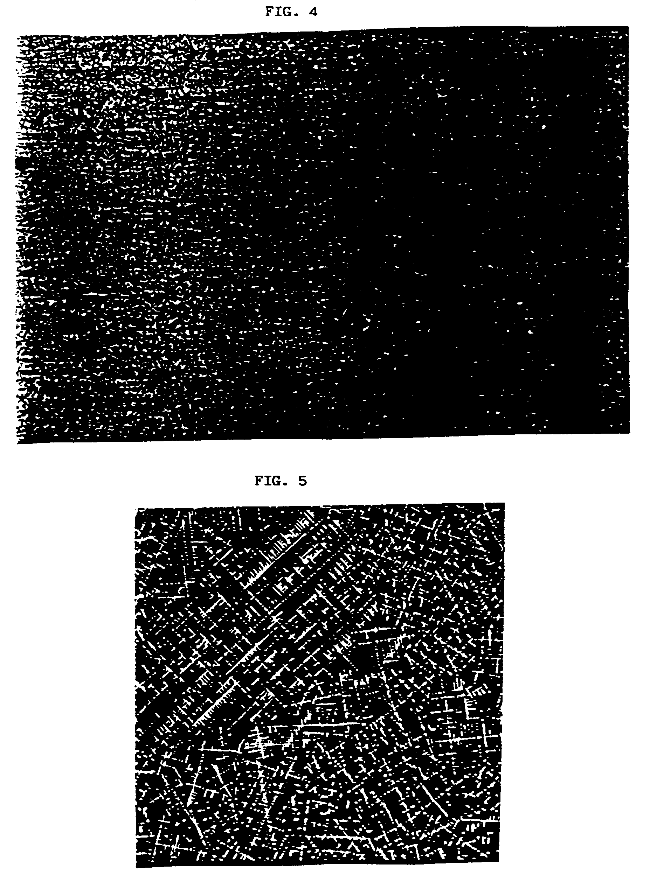

The annealing treatment was carried out at 650°C for 6 hours and gave a richly crystallized structure as shown by electronic and optical microscope inspection (Fig. 4 and 5).

The crystal dimensions are 0.3 - 1.5 µm; the crystals show a dendritic form with unities which grow oriented starting from magnetite nuclei.

The X-diffraction analysis shows the presence of franklinite-(ZnFe₂O₄) and magnetite- (Fe₃O₄) spinels and calcium silicates as α-CaSiO₄.

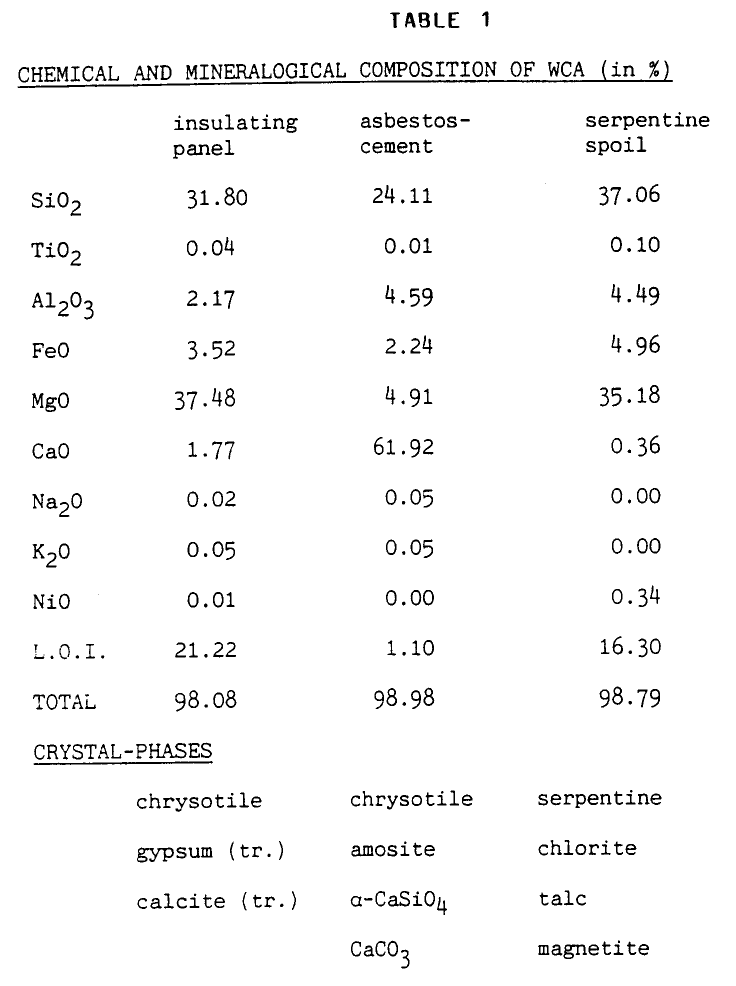

**TABLE 2**

| COMPOSITION AND MINERALOGICAL ANALYSIS OF THE SLURRY (GOETHITE) | |
|---|---|
| SiO₂ | 2.91 |
| TiO₂ | 0.05 |
| Al₂O₃ | 1.39 |
| Fe₂O₃ | 59.00 |
| MgO | 0.51 |
| CaO | 2.99 |
| Na₂O | 3.48 |
| K₂O | 0.05 |
| ZnO | 13.29 |
| NiO | 0.29 |
| CdO | 0.08 |
| PbO | 0.05 |
| As₂O₃ | 0.29 |
| SO₂ | 9.33 |
| H₂O | 6.00 |
| TOTAL | 99.71 |

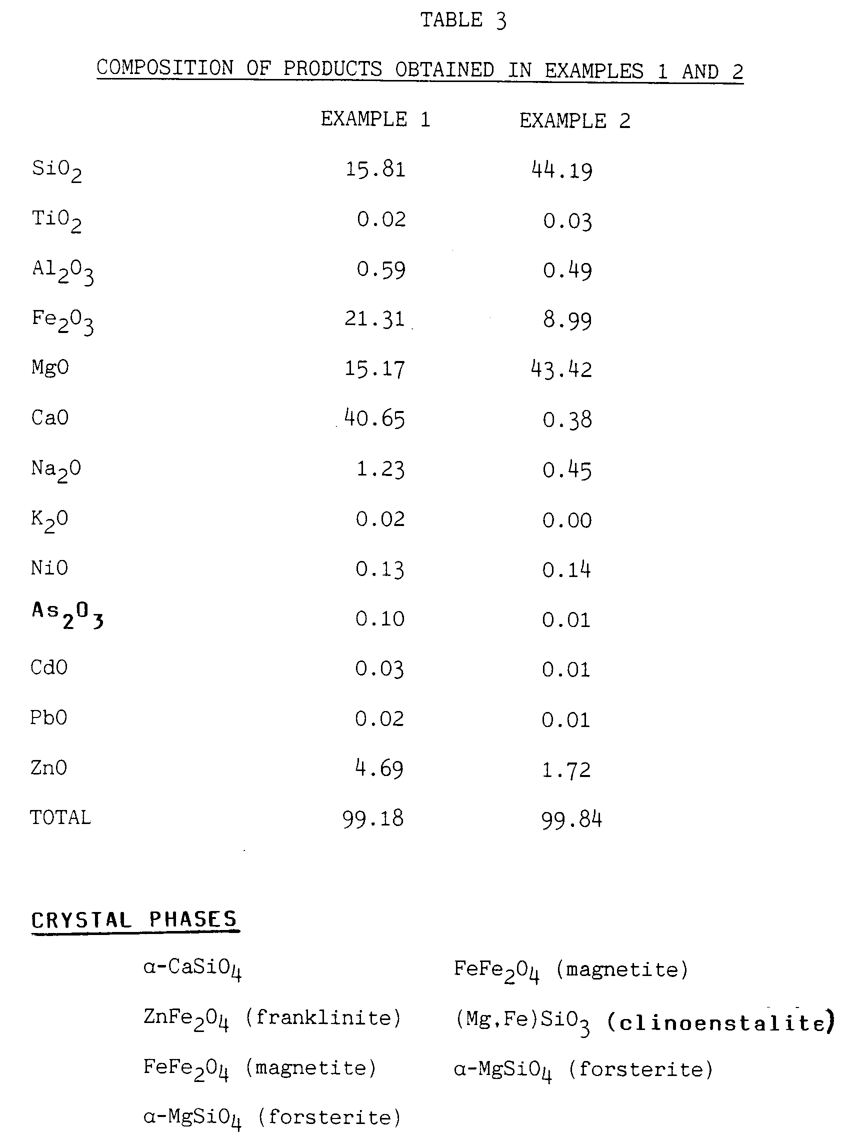

## Claims

1. Process for the preparation of pyrocerams starting from wastes containing asbestos, and slurries from hydrometallurgy-processes for production of zinc wherein:
a) the wastes containing asbestos are grinded up to particles dimension of 10 - 60 µm in the presence of 30% - 70% by weight of water;
b) the slurries from the hydrometallurgy-process are washed and dried up to a water content lower than 40% by weight;
c) the products from steps (a) and (b) are mixed up and water is added to the mixture in a quantity equal to the weight of the mixture components;
d) the obtained mixture is melted and thereafter annealed at a temperature comprised between 600° - 900°C.

2. Process according to claim 1 wherein both products of step (c) are mixed toghether in a precentage of 25% - 90% slurries obtained by grinding the wastes containing asbestos and 10% - 25% slurries obtained by hydrometallurgic process.

3. Process according to claim 2 wherein the melting step is performed at a temperature of 1100°C - 1400°C.

4. Pyrocerams obtained by the process accoridng to claim 1.

## Patentansprüche

1. Verfahren zur Herstellung von Pyroceramen, ausgehend von Asbest enthaltenden Abfallstoffen, und von Aufschlämmungen aus hydrometallurgischen Verfahren zur Herstellung von Zink, wobei:
a) die Asbest enthaltenden Abfallstoffe auf Partikelgrößen von 10 - 60 mm in der Gegenwart von 30 - 70 Gew.-% Wasser zermahlen werden;
b) die Aufschlämmungen aus dem hydrometallurgischen Verfahren gewaschen und bis zu einem Wassergehalt von unter 40 Gew.-% getrocknet werden;
c) die Produkte der Stufen a) und b) gemischt werden und Wasser in einer dem Gewicht der Mischung entsprechenden Menge zugegeben wird;
d) die erhaltene Mischung geschmolzen und anschließend bei einer Temperatur zwischen 600 °C und 900 °C vergütet wird.

2. Verfahren gemäß Anspruch 1, wobei beide Produkte von Stufe c) in einem Verhältnis von 25 % - 90 % der durch Zermahlen der Asbest enthaltenden Abfallstoffe erhaltenen Aufschlämmungen und 10 % - 25 % der aus dem hydrometallurgischen Verfahren stammenden Aufschlämmungen zusammengemischt werden.

3. Verfahren gemäß Anspruch 2 wobei das Schmelzen bei einer Temperatur von 1100 °C - 1400 °C durchgeführt wird.

4. Pyrocerame, erhalten durch das Verfahren gemäß Anspruch 1.

## Revendications

1. Procédé de préparation de pyrocérames obtenus à partir de déchets contenant de l'amiante et de déchets de l'industrie hydrométallurgique pour la production de zinc, caractérisé en ce que :
a) les déchets contenant de l'amiante sont broyés en des particules de 10 à 60 µm en présence de 30 à 70 % en poids d'eau ;
b) les déchets de l'industrie hydrométallurgique sont lavés et séchés jusqu'à une teneur en eau de moins de 40 % en poids ;
c) les produits des étapes (a) et (b) sont mélangés et de l'eau est ajoutée au mélange en une quantité égale au poids des composants du mélange ;
d) le mélange obtenu est fondu et ensuite recuit à une température comprise entre 600 et 900°C.

2. Procédé selon la revendication 1, caractérisé en ce que les deux produits de l'étape (c) sont mélangés l'un à l'autre selon un pourcentage de 25 à 90 % de déchets obtenus par le broyage des déchets contenant de l'amiante et de 10 à 25 % de déchets de l'industrie hydrométallurgique.

3. Procédé selon la revendication 2, caractérisé en ce que l'étape de fusion est réalisée à une température de 1100 à 1400 °C.

4. Pyrocérames obtenus par le procédé selon la revendication 1.
